# EUROPEAN PATENT SPECIFICATION

(11) **EP 1 717 137 B1**
(45) Date of publication and mention of the grant of the patent: **09.06.2010**
(21) Application number: 06007611.4
(22) Date of filing: 11.04.2006
(51) Int. Cl.: B62J 1/28, B62J 7/04

(54) **Motorcycle having a movable tailrack**
Motorrad mit einem beweglichen Gestell
Motocyclette comprenant un support postérieur mobile

(30) Priority: 29.04.2005 US 118207
(43) Date of publication of application: 02.11.2006
(73) Proprietor: Buell Motorcycle Company, East Troy WI 53210 (US)
(72) Inventor: Buell, Erik F., Mukwonago WI 53149 (US); Samarzja, Michael D., Mukwonago WI 53149 (US); Stefanelli, Anthony D., Belvidere IL 61008 (US); Fox, John W., Mukwonago WI 53149 (US); Sheahan, Matthew J., Milwaukee WI 53202 (US)
(74) Representative: Grünecker, Kinkeldey, Stockmair & Schwanhäusser Anwaltssozietät

(56) References cited:
- EP-A- 1 375 320
- DE-B1- 1 039 386
- DE-C- 943 992
- US-A- 3 901 534
- US-A- 4 313 639
- US-A- 4 948 020

## Description

### BACKGROUND

The present invention relates to a motorcycle including a tailrack that is movable into at least three different positions.

Motorcycles include a front wheel and a rear wheel that rotate about separate axles to allow the motorcycle to travel along a road or path. The rider sits on a seat disposed behind the front wheel and substantially in front of and/or above the rear wheel. Some motorcycles include an elongated seat that allows not only the rider to ride on the motorcycle but also allows another passenger to accompany the rider. Generally, the additional passenger sits on the same seat as the rider but is positioned behind the rider.

In addition to carrying additional passengers, it is also sometimes desirable to carry luggage on a motorcycle. Some motorcycles allow for the carrying of luggage on the seat behind the rider. However, with luggage in this position, there is no space for an additional passenger.

Other motorcycles include a luggage rack that extends behind the seat and allows room for a passenger on the seat regardless of whether a passenger is present. Related prior art is disclosed in the United States Patent, US 4,313,639, the German Patent DE 943 992, the European Patent Application EP 1 375 320 A1, the United States Patent US 4,948,020 and the United States Patent US 3,901,534.
As closest prior art US 3,901,534 is seen.

### SUMMARY

The present invention provides a motorcycle including a multi-position tailrack that is movable to one of at least three positions. In a first position, the tailrack is substantially horizontal but extends rearward such that an additional passenger can ride on the seat with the rider. In the first position, the tailrack is also able to support luggage. In a second position, the tailrack extends substantially vertically and provides a backrest for an additional passenger seated behind the rider. In a third position, the tailrack is substantially horizontal and extends forward over a portion of the seat. In this position, luggage can be supported by the tailrack. The invention also provides a system for locking the tailrack into one of the three positions.

### BRIEF DESCRIPTION OF THE DRAWINGS

FIG. 1 is a perspective view of a motorcycle including a tailrack in a backrest position;
FIG. 2 is an enlarged perspective view of the tailrack of FIG. 1 in a third luggage stow position;
FIG. 3 is an enlarged perspective view of the tailrack of FIG. 1 in a first luggage stow position;
FIG. 4 is an exploded perspective view of the tailrack of FIG. 1;
FIG. 5 is an enlarged perspective view of the right side portion of the tailrack of FIG. 1;
FIG. 6 is a perspective view of a detent member;
FIG. 7 is a section view of a portion of the left side of the tailrack in an engaged position taken along line 7-7 of FIG. 4;
FIG. 8 is a section view of a portion of the left side of the tailrack in a disengaged position taken along line 7-7 of FIG. 4;
FIG. 9 is a rear perspective view of a construction of the tailrack of FIG. 1 including a blocking member in an engaged position; and
FIG. 10 is a rear perspective view of a construction of the tailrack of FIG. 1 including the blocking member in a disengaged position.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways as described in the appended claims. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

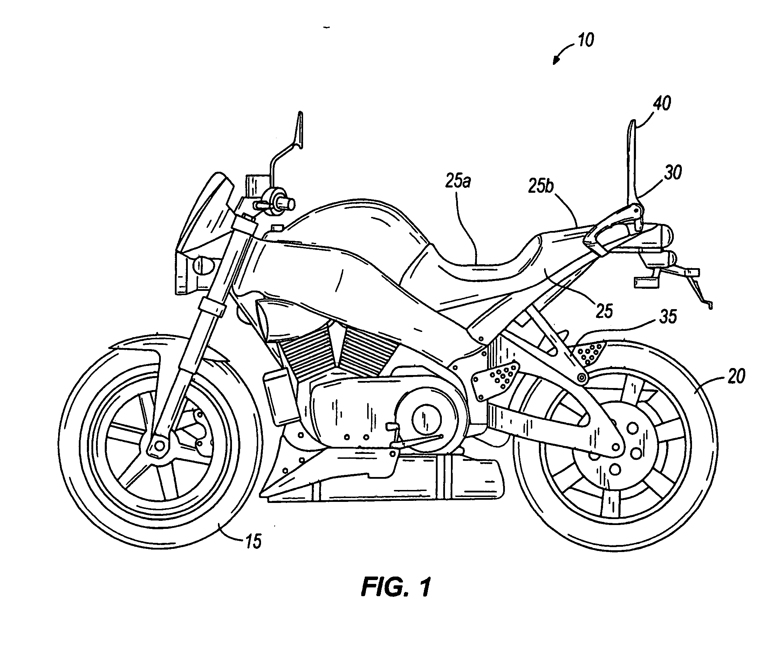

FIG. 1 illustrates a motorcycle 10 that includes a front wheel 15, a rear wheel 20, a seat 25, a tailrack 30, and a frame 35. For purposes of this description, the frame 35 includes all of the components that interconnect the front wheel 15, the rear wheel 20, the seat 25, and the tailrack 30. The arrangement of the front wheel 15 and the rear wheel 20 is well known in the art and is such that the motorcycle 10 is both steerable and operable to travel along a path or road. The seat 25 is positioned behind the front wheel 15 and generally in front of and/or above the rear wheel 20. The seat 25 is elongated to define two distinct seating areas. A rider typically occupies a first seating area 25a, which is disposed near the front portion of the seat 25. The position of a second portion of the seat 25b allows an additional passenger to ride on the motorcycle 10 with the rider. The second portion 25b is disposed directly behind the first portion 25a.

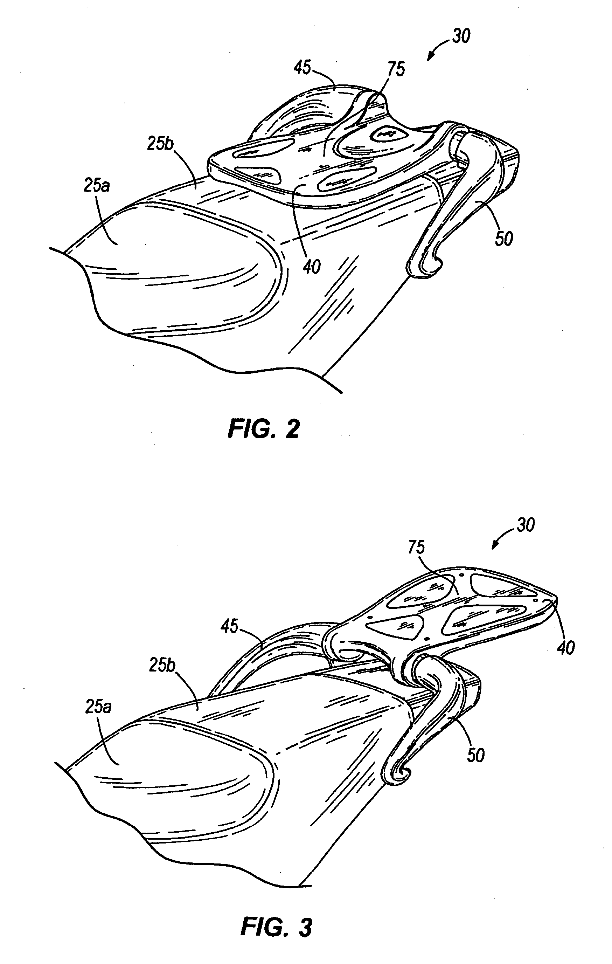

With continued reference to FIG. 1, the tailrack 30 includes a support member or support plate 40 that is shown in a second or upright position. In this position, the support plate 40 extends upward from the rear of the seat 25 such that the support plate 40 is substantially normal to the seat 25. In this position, the support plate 40 can provide support to the passenger seated behind the rider. Turning to FIG. 2, the rear portion of the motorcycle 10 is shown with the tailrack 30 in a third or forward retracted position. In this position, the support plate 40 is substantially horizontal (i.e., substantially parallel to the ground and the rear portion of the seat 25b) and is positioned just above, or in contact with the seat 25. In this position, the support plate 40 can support luggage or other objects (e.g., helmet) without extending rearward. However, in this position, the support plate 40 covers all or part of the rear portion of the seat 25b, thus inhibiting a second passenger from riding on the motorcycle 10.

FIG. 3 illustrates the tailrack 30 in a first or rearward retracted position. In this position, the support plate 40 is again substantially horizontal. However, rather than being positioned over the rear portion of the seat 25b, the support plate 40 extends rearward behind the seat 25. In this position, the support plate 40 can support luggage or other objects, while a rider and a passenger can be positioned on the seat 25.
Thus, as illustrated in FIGS. 1-3, the tailrack 30 is movable between one of three positions. Of course other constructions may include additional positions. For example, one construction includes a tailrack 30 that is movable to both the horizontal positions, and a plurality of substantially vertical positions. Generally, the term "substantially vertical" should be read as including angles that are greater than about 30 degrees from the horizontal. The additional substantially vertical positions allow the passenger to adjust the tailrack 30 to a desired angle to increase their comfort.

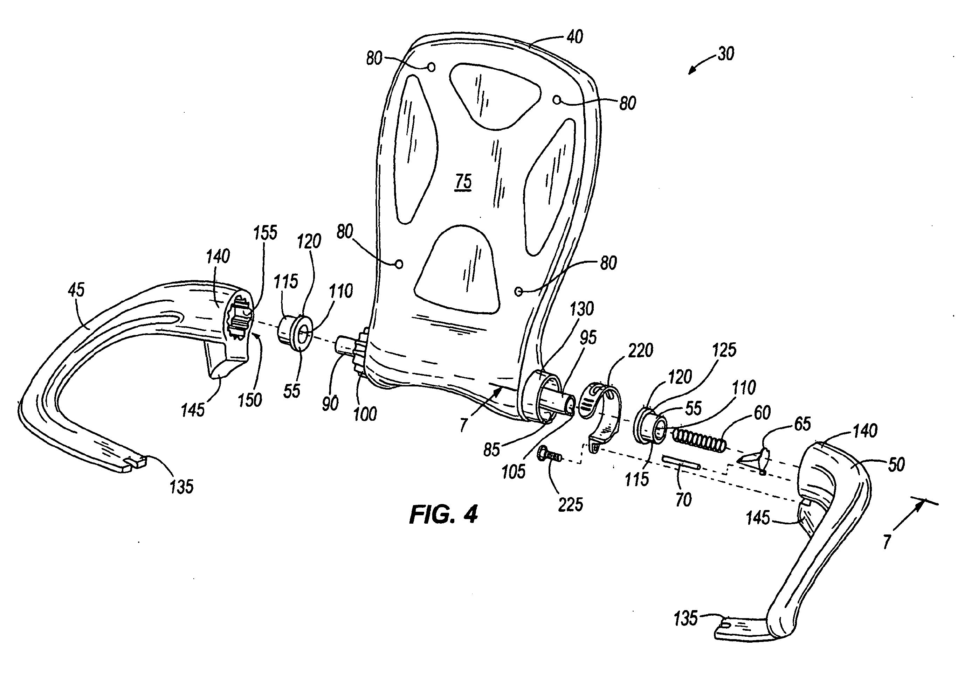

FIG. 4 illustrates the various components of the tailrack 30 in an exploded condition. The tailrack 30 includes the support plate 40, an attachment member including a right side grab handle 45 and a left side grab handle 50, two bushings 55, a spring 60, a detent 65, and a pin 70. The support plate 40 defines two large opposed surfaces 75 that provide support to the passenger or to the luggage depending on the orientation of the tailrack 30. Apertures 80 extend into or through the support plate 40 to provide anchor points for the attachment of the luggage. Other constructions may employ protrusions or other means (e.g., eye hooks, Velcro, and the like) to attach luggage to the support plate 40.

An aperture 85 is defined at each end of the support plate 40. Each aperture 85 receives one of two shafts 90, 95 that extend laterally outward from the support plate 40 substantially parallel to a plane defined by the support surfaces 75. Each shaft 90, 95 fixedly attaches to the support plate 40 such that rotation of the shafts 90, 95 produces a corresponding rotation of the two opposed surfaces 75. One of the shafts 90 includes a spline 100 attached to, or formed as part of the shaft 90. The opposite shaft 95 includes an aperture 105 that extends from the end of the shaft 95 along a long axis A-A of the shaft 95 to a predefined depth. In another construction, a single aperture is provided that extends the full width of the support plate 40. A single shaft extends through the support plate 40 along the aperture and replaces the two separate shafts 90, 95 illustrated in FIG. 4. In still other constructions, the shafts 90, 95 are formed as part of the support plate 40.

Each of the bushings 55 includes an aperture 110 that extends through the bushing 55 and is sized to receive one of the shafts 90, 95. The bushings 55 also include a small outside diameter portion 115 and a large outside diameter portion 120 that cooperate to define a shoulder 125. One of the bushings 55 fits over the shaft 90 that includes the spline 100. The second bushing 55 fits over the second shaft 95 and slides into an operating position. The small outside diameter portions 115 of both bushings 55 extend outward from the large outside diameter portions 120 when the bushings 55 are positioned on the shafts 90, 95 as just described.

The right side grab handle 45 and the left side grab handle 50 each include a first end 135 that attaches to the frame 35 of the motorcycle 10 and a second end 140 that engages and provides support to the support plate 40. In the illustrated construction, the first ends 135 engage fasteners that are disposed beneath the seat 25. In addition, in the illustrated construction, each grab handle 45, 50 includes a support foot 145 positioned near the second end 140. The support foot 145 also attaches to the motorcycle 10 to provide additional support for the support plate 40.

The right side grab handle 45 includes a pocket 150 that is sized to receive the small outside diameter portion 115 of the bushing 55. Generally, the bushing 55 is press-fit into the pocket 150 such that the position of the bushing 55 is substantially fixed with respect to the right side grab handle 45. The pocket 150 also includes a spline-receiving portion 155 that is configured to receive the spline 100 that is attached to the shaft 90. The spline 100 and the spline-receiving portion 155 engage one another to fix the position of the support plate 40 relative to the right side grab handle 45 and the frame 35 of the motorcycle 10. It should be noted that while FIG. 4 illustrates a male spline 100 on the shaft 90 and a female spline-receiving portion 155 formed as part of the pocket 150, these components could be reversed if desired.

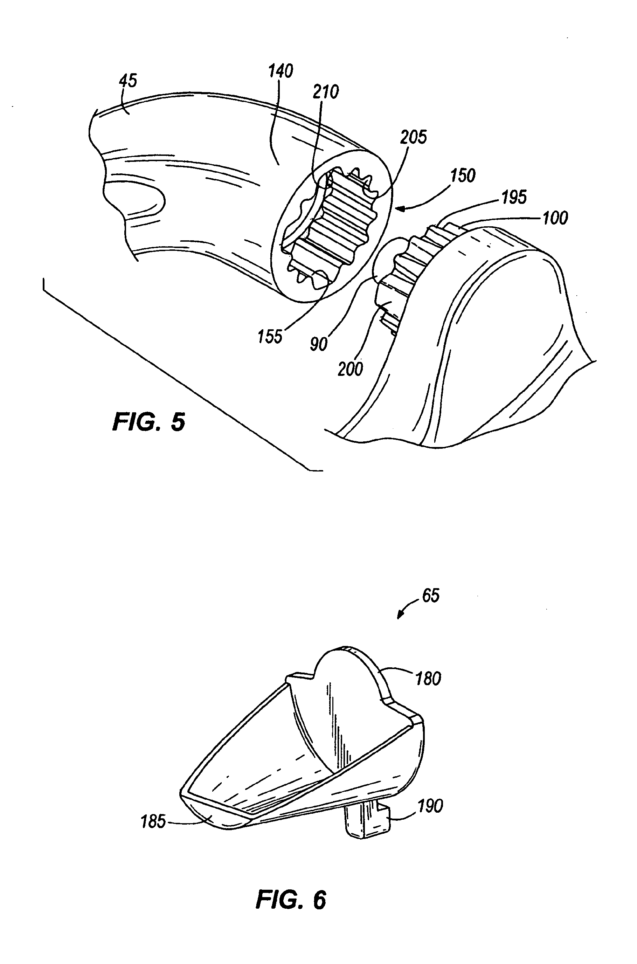

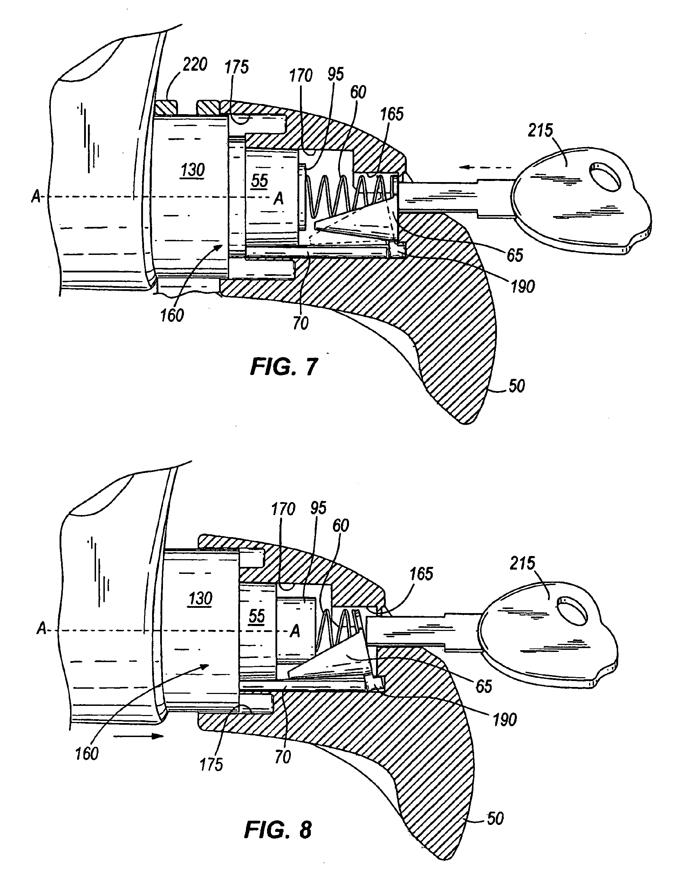

The left side grab handle 50 also defines a pocket 160 (shown in FIGS. 7 and 8). The left side pocket 160 includes a first small diameter aperture 165 that extends into the left side grab handle 50 to a predetermined depth. The pocket 160 also includes a first counterbore 170 that has a larger diameter than the aperture 165 and an annular groove 175 that has a larger diameter than the first counterbore 170. The first counterbore 170 is sized to receive the shaft 95 and the small outside diameter portion 115 of the bushing, while the annular groove 175 is sized to receive the boss 130, as will be described with reference to FIGS. 7 and 8. As with the first bushing 55, the second bushing 55 is preferably press-fit into the first counterbore 170 such that the position of the bushing 55 is substantially fixed with respect to the left side grab handle 50.
The detent 65, illustrated in FIGS. 4 and 6, includes a large end 180, a small end 185, and a tab portion 190 disposed near the large end 180. The large end 180 is substantially circular and is sized to receive an end of the spring 60, while the small end 185 includes an arc portion having a relatively thin wall as compared to the large end 180. The space between the large end 180 and the small end 185 is substantially hollow to allow for the passage of the spring 60 and at least a portion of the shaft 95.

The spring 60 is preferably a coiled compression spring with two flat ends. One end is positioned within the shaft aperture 105 such that it extends along the long axis A-A of the shaft 95 beyond the bushing 55. As described, the second end of the spring 60 engages the detent 65 such that the spring 60 biases the detent 65 into a position in which it abuts the bottom of the left side grab handle pocket 160, as will be described with reference to FIGS. 7 and 8.

FIG. 5 illustrates the spline 100 and spline-receiving portion 155 in greater detail. As can be seen, the spline 100 includes a plurality of small teeth 195 and one tooth 200 that is larger than the small teeth 195. The spline-receiving portion 155 includes a plurality of small tooth-receiving pockets 205 and three large tooth-receiving pockets 210 that are larger than the small tooth-receiving pockets 205. Thus, in order for the spline 100 to engage the spline-receiving portion 155, the large tooth 200 must align with one of the large tooth-receiving pockets 210.

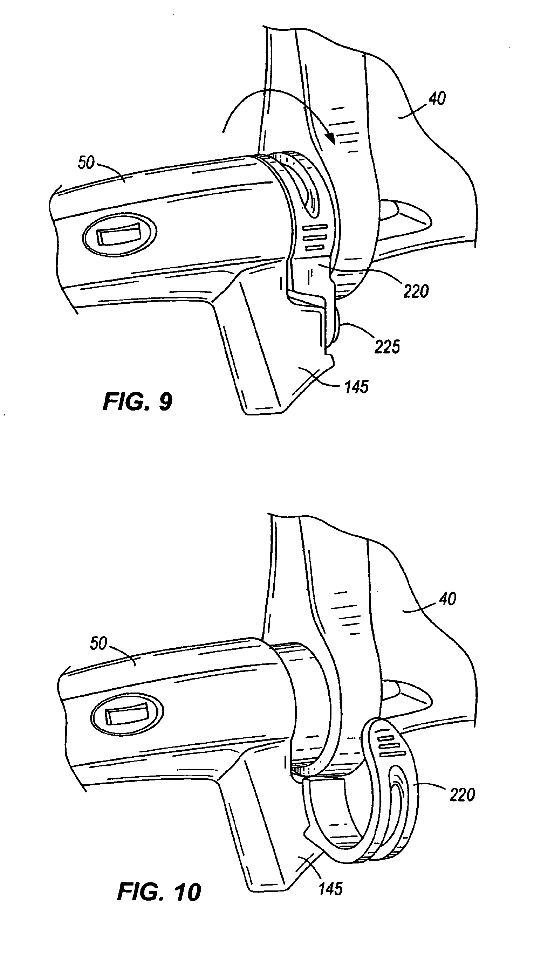

The large tooth 200 and the large tooth-receiving pockets 210 are positioned such that when the large tooth 200 engages one of the large tooth-receiving pockets 210, the tailrack 30 is in one of the first, second, or third positions illustrated in FIGS. 1-3. Thus, the present tailrack 30 is lockable in three discrete predetermined positions. Other constructions may employ additional large teeth 200 or different shaped teeth to achieve the result described. For example, one construction employs a plurality of triangular teeth with one square-shaped tooth. The square-shaped tooth is only able to engage a square-shaped pocket, thus limiting the positions in which the spline can engage the spline-receiving portion.
In some constructions, the tailrack 30 includes a blocking member that inhibits movement of the support plate 40 from the engaged position to the disengaged position. As illustrated in FIGS. 9 and 10, one construction employs a blocking member in the form of a collar 220 that attaches to the left side grab handle 50 using a fastener, such as a screw 225. The screw 225 threadably engages the left side grab handle 50 and defines a pivot axis for the collar 220. Thus, the collar 220 rotates about the pivot axis between a first or engaged position illustrated in FIG. 9 and a second or disengaged position, illustrated in FIG. 10.

The collar 220 is a substantially rigid component that is curved to define a diameter that is the same as or slightly smaller then the outside diameter of the boss 130. When in the engaged position, the larger diameter by the boss 130 biases the collar 220 into a slightly larger diameter, thus holding the collar 220 in the engaged position using a "snap" fit. In some constructions, the collar 220 may include a lip, hook, fastener, or other means that aids in holding the collar 220 in the engaged position and/or effectively reduces the diameter of the collar 220.

As illustrated in FIG. 9, the collar 220 is disposed adjacent the boss 130 between the left side grab handle 50 and the support plate 40 when in the engaged position. In this position, the collar 220 inhibits movement of the support plate 40 toward the left side grab handle 50.
As shown in FIG. 10, the collar 220 rotates to a disengaged position where the collar 220 no longer inhibits movement of the support plate 40 toward the left side grab handle 50.

With reference to FIGS. 4 and 7-8 the assembly of the tailrack 30 will be described. The shafts 90, 95 are first coupled to the support plate 40 such that they are fixed with respect to the plate 40. In some constructions, the shafts 90, 95 are pinned or attached with an adhesive. However, any suitable attachment means can be used to fixedly attach the shafts 90, 95, or shaft, to the support plate 40. In constructions in which the shafts 90, 95 are formed as part of the support plate 40, no assembly step is required. The right side bushing 55 is pressed into pocket 150 such that the small diameter portion 115 of the bushing 55 engages the pocket 150. Similarly, the left side bushing 55 is press fit into the pocket 160 of the left side grab handle 50. In constructions that employ the collar 220, the collar 220 can be attached using the screw 225 at nearly anytime during the assembly.

The bushing 55 disposed within the right side grab handle 45 receives the right side shaft 90 and allows the right side grab handle 45 to move into a position in which the spline 100 engages the spline-receiving portion 155. In this position, the large diameter portion 120 of the bushing 55 abuts, or nearly abuts, the spline 100.
The spring 60 is positioned within the aperture 105 of the second shaft 95. The detent 65 is placed within the pocket 160 of the left side grab handle 50 and the left side grab handle 50 is coupled to the support plate 40 such that the shaft 95 extends into the aperture 110 of the bushing 55. The pin 70 is positioned within the pocket 160 such that it engages the tab 190 of the detent 65 and the shoulder 125 of the bushing 55. The bushing 55 press fits into the pocket to trap the pin 70 and the detent 65 in the proper operating position. With the pin 70 positioned as shown in FIG. 7, the pin 70 holds the tab 190 of the detent 65 against the left side grab handle 50.

In operation, the tailrack 30 is movable between three or more locked positions and an unlocked position in which the tailrack 30 can be transitioned between the locked positions.
FIG. 7 illustrates the tailrack 30 in one of the three locked positions. In this position, the spring 60 pushes the detent 65 toward the left side grab handle 50 and pushes the shaft 95 and the support plate 40 toward the right side grab handle 45 such that the spline 100 engages the spline-engaging portion 155 and locks the angular position of the support plate 40 relative to the grab handles 45, 50. The small end 185 of the detent 65 is in a position to engage the end of the shaft 95 to inhibit unwanted movement of the support plate 40 to the left. In addition, in constructions that employ the collar 220, such as is illustrated in FIG. 7, the collar 220 is positioned in the engaged position to further inhibit movement of the support plate 40 to the left toward the left side grab handle 50. A movement to the left has the effect of disengaging the spline 100 and the spline-engaging portion 155.

FIG. 8 illustrates the tailrack 30 in the unlocked position. To transition from the locked to the unlocked position, the rider inserts a key 215, or other device, into a key aperture formed in the left side grab handle 50. The key 215 contacts the large end 180 of the detent 65 opposite the tab 190. As the key 215 is inserted further, the detent 65 is pushed toward the support plate 40, against the biasing force of the spring 60. The pin 70 engages the tab 190 and inhibits movement of the detent 65 along the shaft axis A-A, thus forcing the detent 65 to pivot about the contact point between the pin 70 and the tab 190. The small end 185 of the detent 65 moves downward and out of the path of travel of the shaft 95. In constructions that employ the collar 220, one must also move the collar 220 from the engaged position shown in FIGS. 7 and 9 to the disengaged position shown in FIG. 10. If the collar 220 is not moved to the disengaged position, the user will be unable to move the support plate 40 to the left, even with the key 215 fully inserted into the key aperture. Once the detent 65 and collar 220, if employed, are disengaged, the support plate 40, and the two shafts 90, 95 are free to move toward the left side grab handle 50 a sufficient distance to disengage the spline 100 from the spline-receiving portion 155. As the support plate 40 moves to the left, the shaft 95 moves into the first counterbore 170 and the boss 130 moves into the annular groove 175. Thus, the first counterbore 170 and the annular groove 175 provide the clearance needed to allow for the lateral movement of the support plate 40. Once the spline 100 is disengaged from the spline-receiving portion 155, the support plate 40 is free to pivot relative to the grab handles 45, 50 about the shaft axis A-A. Once positioned as desired, the support plate 40 is moved toward the right side grab handle 45 into a locked position and the key 215 is removed. The spring 60 biases the detent 65 back into the locked position to inhibit movement of the support plate 40 to the left and out of the new locked position. In addition, in constructions that employ the collar 220, the user also moves the collar 220 from the disengaged position to the engaged position. It should be noted that once the shaft 95 and the support plate 40 move to the left, the key 215 can be removed. In addition, the spring 60 biases the support plate 40 back toward the locked position.

Thus, the invention provides a motorcycle including a new and useful tailrack 30. More particularly, the invention provides a motorcycle including a new and useful tailrack 30 that is movable to at least three discrete locked positions and at least one unlocked position.
Various features and advantages of the invention are set forth in the following claims.

## Claims

1. A motorcycle (10) including a seat (25), with a front seat portion (25a) adapted to carry a first rider and a rear seat portion (25b) adapted to carry a second rider, and a tailrack (30), the tailrack (30) comprising:
an attachment member (45,50) having a first end adapted to attach to the motorcycle; and
a support member (40) coupled to the attachment member and movable between a first position in which the support member (40) is parallel to the rear seat portion (25b) and is disposed substantially behind the rear seat portion (25b) of the seat (25) and a second position in which the support member (40) is normal to the seat (25) and **characterized in** comprising, a third position in which the support member (40) is parallel to the rear seat portion (25b) and extends over at least a portion of the rear portion (25b) of the seat (25).

2. The motorcycle (10) of claim 1, wherein the attachment member includes a first grab member (45) disposed substantially on a first side of the support member (40) and a second grab member (50) disposed on the opposite side of the support member (40).

3. The motorcycle (10) of claim 1 or 2, wherein one of the attachment member and the support member (40) includes a spline (100) and the other of the attachment member and the support member (40) includes a spline-receiving portion (155).

4. The motorcycle (10) of claim 3, wherein the spline (100) includes a first tooth (195) having a first profile and a second tooth (200) having a second profile different from the first tooth profile.

5. The motorcycle (10) of claim 3, wherein the spline (100) and the spline-receiving portion (155) are coupled to one another when the support member (40) is in one of the first position, the second position, and the third position.

6. The motorcycle (10) of claim 5, wherein the support member (40) is movable to a fourth position in which the spline (100) is disengaged from the spline-receiving portion (155).

7. The motorcycle (10) of one of the claims 1 to 6, wherein the support member (40) is movable to a fourth position in which the support member (40) is rotatable about an axis defined by the attachment member.

8. The motorcycle (10) of claim 7, further comprising a detent (65) movable between a first position and a second position, when in the second position the support member is movable to the fourth position.

9. The motorcycle (10) of claim 8, further comprising a biasing member (60) positioned to bias the detent (65) into the first position.

10. The motorcycle (10) of one of the claims 7 to 9, wherein the fourth position is offset a distance along the axis relative to the first position, the second position, and the third position.

11. The motorcycle (10) of one of the foregoing claims, further comprising a blocking member (220) coupled to one of the support member (40) and the attachment member and selectively movable into an engaged position in which a portion of the blocking member (220) is disposed between the support member (40) and the attachment member.

12. The motorcycle (10) of one of the foregoing claims, wherein the support member (40) is movable into a plurality of substantially vertical positions which are substantially normal to the rear seat portion (25b) each of the plurality of substantially vertical positions being different from the second position and different from one another.

13. The motorcycle (10) of one of the claims 7 to 12, wherein the axis is positioned above the seat (25).

## Patentansprüche

1. Motorrad (10), das eine Sitzbank (25) mit einem vorderen Sitzbereich (25a) für einen ersten Fahrer und einem hinteren Sitzbereich (25b) für einen zweiten Fahrer sowie ein Heckgestell (30) aufweist, wobei das Heckgestell (30) umfasst:
ein Befestigungselement (45, 50) mit einem ersten Ende zur Befestigung am Motorrad; und
ein Trägerelement (40), das mit dem Befestigungselement verbunden ist und zwischen einer ersten Position, in der sich das Trägerelement (40) parallel zum hinteren Sitzbereich (35b) und im Wesentlichen hinter dem hinteren Sitzbereich (25b) der Sitzbank (25) befindet und einer zweiten Position, in der das Trägerelement (40) lotrecht zur Sitzbank (25) steht, hin und her bewegt werden kann, **dadurch gekennzeichnet, dass** eine dritte Position vorhanden ist, in der das Trägerelement (40) parallel zum hinteren Sitzbereich (25b) ist und sich zumindest über einen Teil des hinteren Bereichs (25b) der Sitzbank (25) erstreckt.

2. Motorrad (10) nach Anspruch 1, wobei das Befestigungselement ein erstes Griffelement (45) umfasst, das im Wesentlichen an einer ersten Seite des Trägerelements (40) angeordnet ist und ein zweites Griffelement (50), das an der gegenüberliegenden Seite des Trägerelements (40) angeordnet ist.

3. Motorrad (10) nach Anspruch 1 oder 2, wobei entweder das Befestigungselement oder das Trägerelement (40) einen Keil (100) aufweist und das jeweils andere Bauteil (Befestigungselement oder Trägerelement (40)) einen Abschnitt zur Keilaufnahme (155) umfasst.

4. Motorrad (10) nach Anspruch 3, wobei der Keil (100) einen ersten Zahn (195) mit einem ersten Profil und einen zweiten Zahn (200) mit einem zweiten Profil aufweist, das sich von dem ersten Zahnprofil unterscheidet.

5. Motorrad (10) nach Anspruch 3, wobei der Keil (100) und der Abschnitt zur Keilaufnahme (155) miteinander verbunden sind, wenn sich das Trägerelement (40) in der ersten, zweiten oder dritten Position befindet.

6. Motorrad (10) nach Anspruch 5, wobei das Trägerelement (40) in eine vierte Position bewegt werden kann, in der der Keil (100) aus dem Abschnitt zur Keilaufnahme (155) ausgerückt ist.

7. Motorrad (10) nach einem der Ansprüche 1 bis 6, wobei das Trägerelement (40) in eine vierte Position bewegt werden kann, in der das Trägerelement (40) um eine Achse gedreht werden kann, die durch das Befestigungselement definiert wird.

8. Motorrad (10) nach Anspruch 7, das ferner eine Sperrklinke (65) aufweist, die zwischen einer ersten und einer zweiten Position hin und her bewegt werden kann, wobei in der zweiten Position das Trägerelement in die vierte Position bewegt werden kann.

9. Motorrad (10) nach Anspruch 8, das ferner ein Spannelement (60) aufweist, das so angeordnet ist, dass die Sperrklinke (65) in die erste Position gelenkt wird.

10. Motorrad (10) nach einem der Ansprüche 7 bis 9, wobei die vierte Position entlang der Achse relativ zur ersten, zweiten und dritten Position um eine Distanz versetzt ist.

11. Motorrad (10) nach einem der vorhergehenden Ansprüche, das weiterhin ein Blockierungselement (220) aufweist, das mit dem Trägerelement (40) oder dem Befestigungselement verbunden ist und wahlweise in eine eingerückte Stellung gebracht werden kann, in der ein Abschnitt des Blockierungselements (220) zwischen dem Trägerelement (40) und dem Befestigungselement angeordnet ist.

12. Motorrad (10) nach einem der vorhergehenden Ansprüche, wobei das Trägerelement (40) in eine Vielzahl von im Wesentlichen vertikalen Positionen bewegt werden kann, die im Wesentlichen lotrecht zum hinteren Sitzbereich (25b) sind, wobei jede der Vielzahl an vertikalen Positionen sich von der zweiten Position und den anderen Positionen unterscheidet.

13. Motorrad (10) nach einem der Ansprüche 7 bis 12, wobei sich die Achse oberhalb der Sitzbank (25) befindet.

## Revendications

1. Motocyclette (10) incluant un siège (25), avec une portion de siège avant (25a) adaptée pour porter un premier passager et une portion de siège arrière (25b) adaptée pour porter un second passager, et un porte-bagages (30), le porte-bagages (30) comprenant :
un organe de fixation (45, 50) ayant une première extrémité adaptée pour se fixer à la motocyclette ; et
un organe de support (40) couplé à l'organe de fixation et mobile entre une première position dans laquelle l'organe de support (40) est parallèle à la portion de siège arrière (25b) et est disposé sensiblement derrière la portion de siège arrière (25b) du siège (25) et une deuxième position dans laquelle l'organe de support (40) est normal au siège (25) et
**caractérisé en ce qu'**il comprend une troisième position dans laquelle l'organe de support (40) est parallèle à la portion de siège arrière (25b) et s'étend au-dessus d'au moins une portion de la portion arrière (25b) du siège (25).

2. Motocyclette (10) selon la revendication 1, dans laquelle l'organe de fixation inclut un premier organe d'accrochage (45) disposé sensiblement sur un premier côté de l'organe de support (40) et un second organe d'accrochage (50) disposé sur le côté opposé de l'organe de support (40).

3. Motocyclette (10) selon la revendication 1 ou 2, dans laquelle l'un de l'organe de fixation et de l'organe de support (40) inclut une cannelure (100) et l'autre de l'organe de fixation et de l'organe de support (40) inclut une portion de réception de cannelure (155).

4. Motocyclette (10) selon la revendication 2, dans laquelle la cannelure (100) inclut une première dent (195) ayant un premier profil et une seconde dent (200) ayant un second profil différent du premier profil de dent.

5. Motocyclette (10) selon la revendication 3, dans laquelle la cannelure (100) et la portion de réception de cannelure (155) sont couplées l'une à l'autre lorsque l'organe de support (40) se trouve dans l'une de la première position, de la deuxième position et de la troisième position.

6. Motocyclette (10) selon la revendication 5, dans laquelle l'organe de support (40) est mobile vers une quatrième position dans laquelle la languette (100) est dégagée de la portion de réception de languette (155).

7. Motocyclette (10) selon l'une des revendications 1 à 6, dans laquelle l'organe de support (40) est mobile vers une quatrième position dans laquelle l'organe de support (40) est rotatif autour d'un axe défini par l'organe de fixation.

8. Motocyclette (10) selon la revendication 7, comprenant en outre une détente (65) mobile entre une première position et une seconde position, lorsque dans la deuxième position, l'organe de support est mobile vers la quatrième position.

9. Motocyclette (10) selon la revendication 8, comprenant en outre un organe de sollicitation (60) positionné pour solliciter la détente (65) dans la première position.

10. Motocyclette (10) selon l'une des revendications 7 à 9, dans laquelle la quatrième position est décalée sur une distance suivant l'axe par rapport à la première position, la deuxième position et la troisième position.

11. Motocyclette (10) selon l'une des revendications précédentes, comprenant en outre un organe de blocage (220) couplé à l'un de l'organe de support (40) et de l'organe de fixation et sélectivement mobile dans une position engagée dans laquelle une partie de l'organe de blocage (220) est disposée entre l'organe de support (40) et l'organe de fixation.

12. Motocyclette (10) selon l'une des revendications précédentes, dans laquelle l'organe de support (40) est mobile vers une pluralité de positions sensiblement verticales qui sont sensiblement normales à la portion de siège arrière (25b), chaque position de la pluralité de positions sensiblement verticales étant différente de la deuxième position et différente l'une de l'autre.

13. Motocyclette (10) selon l'une des revendications 7 à 12, dans laquelle l'axe est positionné au-dessus du siège (25).
